# EUROPÄISCHE PATENTSCHRIFT

(11) **EP 0 481 261 B1**
(45) Veröffentlichungstag und Bekanntmachung des Hinweises auf die Patenterteilung: **31.08.1994**
(21) Anmeldenummer: 91116410.1
(22) Anmeldetag: 26.09.1991
(51) Int. Cl.: E21B 17/046, F16L 21/08, F16L 25/00

(54) **Rohrverbindung, insbesondere für Bohrrohre**
Pipe connection, especially for drill pipes
Connexion de tube, notamment pour tubes de forage

(30) Priorität: 17.10.1990 DE 4032928
(43) Veröffentlichungstag der Anmeldung: 22.04.1992
(73) Patentinhaber: STAHL- UND APPARATEBAU HANS LEFFER GmbH, D-66125 Saarbrücken (DE)
(72) Erfinder: Leffer, Michael, W-6653 Blieskastel (DE)
(74) Vertreter: Flaccus, Rolf-Dieter, Dr.

(56) Entgegenhaltungen:
- DD-A- 59 760
- DE-A- 2 455 799
- FR-A- 2 179 718

## Beschreibung

Die Erfindung betrifft eine Rohrverbindung, insbesondere für Bohrrohre, nach dem Oberbegriff des Anspruchs 1.

Durch die DE-OS 24 34 298 ist es bekannt, die einander übergreifenden Enden von Bohrrohrschüssen mittels über den Umfang verteilt angeordneter, radial gerichteter, als Magnete ausgebildeter Verbindungsbolzen gegeneinander zu verspannen.

Durch die DE-PS 22 11 041 und die DE-OS 26 06 880 ist auch eine Rohrverbindung für Bohrrohre od.dgl. bekannt, bei der die radialen Verbindungselemente als Klemmhülse mit in diese eintreibbarem Spannelement zum Aufweiten der Klemmhülse ausgebildet sind und wobei die Klemmhülse sowohl nach der Rohrinnenals auch nach der Rohraußenseite zu konisch erweitert ist und ebenso die Radialbohrungen in den zu verbindenden Rohrteilen entsprechend konisch ausgebildet sind.

Diese Verbindungen weisen jedoch nicht die insbesondere für den robusten Betrieb beim Abteufen von verrohrten Bohrungen auftretenden hohen Beanspruchungen erforderliche Sicherheit auf und sind daher für diesen Zweck nur bedingt geeignet.

Bekannt ist auch eine Rohrverbindung für Bohrrohre, bei der in das zapfenförmige Ende der zu verbindenden Rohrteile von außen her mit einer Ringschulter versehene Konusringe und in das muffenförmige Ende der zu verbindenden Rohrteile von innen her ebenfalls mit einer Ringschulter versehene Gewinderinge eingesetzt und letztere längs ihres Umfangs mit dem Rohrteil verschweißt sind. Über den Umfang verteilt sind im Gewindering und im Konusring radial gerichtete, zueinander koaxial ausgerichtete Öffnungen vorgesehen, von denen diejenigen im Gewindering mit einem Gewinde und diejenigen im Konusring als Konus ausgebildet sind. Die gegenseitige Verspannung zwischen Gewindering und Konusring bzw. den beiden einander übergreifenden Rohrteilen erfolgt mittels in den Gewindering eingeschraubter und mit einem Konus in die konische Bohrung des Konusrings hineinragender Gewindekupplungselemente, wobei zur festen Anbringung im gewindeseitigen Teil der Gewindekupplungselemente ein Innensechskant vorgesehen ist.

Bei dieser Ausführung wird bei der Übertragung der Umfangs- und Zugkräfte, die zum Abteufen bzw. Herausziehen der Bohrrohre aufgebracht werden, das Gewinde des Gewindekupplungselements in radialer Richtung beansprucht. Da herstellungstechnisch Schraubverbindungen in radialer Richtung "Luft" haben und nicht zentrieren, ist keine definierte Fläche zur Kraftübertragung vorhanden, d.h. die Verbindung ist nicht kraftschlüssig. Bei hohen Beanspruchungen der Bohrrohrverbindung wie sie insbesondere bei tiefen Bohrungen oder bei schwierigen Bodenverhältnissen auftreten können, kann es daher vorkommen, insbesondere auch unter Berücksichtigung dessen, daß bei Verwendung einer Verrohrungsmaschine des Bohrrohres um einen bestimmten Winkelbetrag oszillierend in Umfangsrichtung hin- und herbewegt wird, daß die schraubenförmigen Gewindekupplungen sich durch die radiale Beanspruchung teils unlösbar festdrehen, so daß sie beim Auseinandernehmen des Bohrrohres ausgebrannt werden müssen, oder daß sie sich in mehr oder weniger großer Zahl lösen, was sogar zum Verlust eines Teils des Rohrstranges führen kann, wenn alle Gewindekupplungselemente verloren gehen. Dieser Vorgang wird dadurch begünstigt, daß das Anziehen des Gewindeteils der Gewindekupplung gegen die zwischen dem mit dem Gewindeteil einstückig verbundenen und damit hinsichtlich seiner axialen Weiterbewegung direkt mit der Verdrehung des Gewindeteils gekoppelten Konusteils der Gewindekupplung und der Konusfläche des Konusrings bewirkten Preßkraft erfolgt, wodurch radial ein Auseinanderdrücken von Gewindering und Konusring und über diese auch der zu verbindenen Rohrenden bewirkt wird und dadurch das Gewindekupplungsselement in axialer Richtung vorgespannt ist. Gewindekupplungen die sich teilweise gelöst haben und außenseitig überstehen, können beim Herausziehen des Rohres mittels der Verrohrungsmaschine zu Schäden an den Klemmschellen der Verrohrungsmaschine führen.

Abgesehen von der Wanderung bzw. dem Lösen und Herausdrehen der Kupplungsschrauben an sich mit den vorstehend beschriebenen Konsequenzen führt die radiale Beanspruchung des Gewindeteiles alleine schon zu einem hohen Verschleiß der Verbindungsteile.

Das Dokument DD-A-59,760, vgl. Oberbegriff des Anspruchs 1, zeigt eine Rohrverbindung, insbesondere für Bohrrohre, bei der die koaxial miteinander zu verbindenden Rohrteile auf einem Teil ihrer Länge außen- bzw. innenseitig mit einer ringzylindrischen Ausnehmung versehen sind und sich längs dieses Teils ergänzend gegenseitig überlappen, und bei der die Rohrteile im überlappten Bereich mit wenigstens zwei, vorzugsweise einer Mehrzahl von gleichmäßig über den Umfang verteilt angeordneten, radialen, zueinander koaxialen Bohrungen versehen sind, in welche Ringe eingesetzt sind, über welche die Rohrteile mittels eines Gewindeelementes zug- und drehfest miteinander verbunden sind, und wobei in die Wand des innen befindlichen Rohrteils Gewinderinge mit einer zentralen Gewindebohrung sowie mit einer Ringnut mit konischer Fläche bündig mit der Innenfläche des Rohrteils in dieses eingesetzt sind, und wobei die Rohrteile mittels eines Konusbolzens miteinander verbunden sind, der einen Ring mit konischer Außenfläche aufgreift, der in eine kompatible konische Bohrung des äußeren Rohrteils eingesetzt ist, sowie eine in diesen mit radialem Spiel verdrehbar eingesetzte Bundschraube mit stufenförmig abgesetztem Kopfteil, welche in diesem mittels einer das kopfseitige Ende der Bundschraube umgebenden, in den Ring eingesetzten Abdeckscheibe mit axialem Spiel gehalten ist, wobei bei völlig in die Gewindebohrung des Gewinderinges eingeschraubten Konusbolzen durch Anlage des bundförmigen Ansatzes der Bundschraube gegen eine radiale Ringfläche des Ringes das axiale Spiel zwischen Bundschraube und Ringkonus aufgehoben und der Ringkonus mit seiner konischen Außenfläche bündig an eine konische Gegenfläche angepreßt ist und dabei die Rohrteile starr miteinander verbunden sind. Bei dieser Ausführung erfordern die konischen Sitze von Innenring und Außenring in den entsprechenden konischen Bohrungen der beiden Rohrteile ein Höchstmaß an fertigungstechnischer Präzision bezüglich der einzuhaltenden Fassungstoleranzen.

Der Erfindung liegt die Aufgabe zugrunde, eine kraftschlüssige Rohrverbindung zu schaffen, die auch bei hohen Belastungen sicher und den Anforderungen uneingeschränkt gewachsen ist.

Diese erfindungsgemäße Aufgabe wird bei einer Rohrverbindung gemäß dem Oberbegriff des Anspruchs 1 gelöst mit einer Ausbildung gemäß den Merkmalen des Kennzeichens des Anspruchs 1. Zweckmäßige weitere Ausgestaltungen des Erfindungsgedankens sind in den Unteransprüchen beschrieben.

Ein wesentlicher Vorteil der erfindungsgemäßen Rohrverbindung ist es, daß bei ihr der Konusring im Unterschied zu der vorstehend beschriebenen bekannten Lösung nunmehr außen und umgekehrt der Gewindering innen angeordnet ist, wobei der Gewindering nunmehr auch für das Zusammenwirken mit einem konisch ausgebildeten Kupplungselement ausgebildet ist. Der Gewindeteil des Verbindungs- bzw. Kupplungselementes hat nunmehr nur noch die Funktion, die Teile in axialer Richtung des Schraubenteils zusammenzuziehen und unter eine axiale Vorspannung zu bringen, während die gegenseitige starre Verriegelung der Rohrteile miteinander, d.h. die Kraftübertragung sowohl in Anfangs- wie auch in Zugrichtung im Sinne der starren Verriegelung der Verbindungsteile, nicht durch das Schraubenelement, sondern über konische Flächen bewirkt wird. Das Schraubelement ist dabei nur axial vorgespannt und nimmt, abgesehen von Reibungskräften, keinerlei radial gerichtete Kräfte auf. Über die konischen Flächen findet eine klar definierte Kraftübertragung statt, wobei die Teile, die gemäß dem Stand der Technik beim Herstellen der Verbindung auseinandergedrückt werden, nunmehr gemäß der Erfindung in Achsrichtung des bzw. der Konusbolzen zusammengezogen werden, wobei durch das zwischen dem Schraubelement und dem dieses aufnehmenden Ringkonus vorhandene radiale Spiel die Übertragung von radial wirkenden Kräften auf den Gewindeteil vermieden wird. Entsprechend zeigt das Schraubelement bzw. dessen schraubenförmiger Teil keinerlei Tendenz, sich während des Betriebs ungewollt zu lösen oder unlösbar festzuziehen.

Vorteilhaft bei der erfindungsgemäßen Rohrverbindung, bei welcher nur einfach herzustellende rotationssymmetrische Teile Verwendung finden und die Rohre bzw. Rohrteile kraftschlüssig über definierte konische Flächen miteinander verbunden sind, ist auch die Möglichkeit des schnellen und problemlosen Anziehens und Lösens der Konusbolzen und die gleichmäßige Kraftübertragung auf alle zur Verwendung kommenden Konusbolzen sowie deren fester Sitz. Da die Konusbolzen nicht "wandern", ist eine hohe Betriebssicherheit und gleichzeitig auch ein geringer Verschleiß gewährleistet, und zwar sowohl dann, wenn das Abteufen der verrohrten Bohrung mittels oszillierend arbeitender Verrohrungsmaschinen oder auch mittels über einen Rotationsantrieb endlos drehender Drehbohrgeräte erfolgt.

Die Erfindung ist in der Zeichnung in einem Ausführungsbeispiel gezeigt und wird anhand dessen im folgenden erläutert. Es zeigen:
- Fig. 1: in einem Ausschnitt und im Längsschnitt die erfindungsgemäße Rohrverbindung für das Verbinden von doppelwandigen Bohrrohren,
- Fig. 2: die Rohrverbindung der Fig. 1 in einem Ausschnitt un in etwas größerem Maßstab,
- Fig. 3: in etwas kleinerem Maßstab den inneren Gewindering der Fig. 1 und 2 in einer Ansicht, einer Draufsicht und in einem Schnitt in Seitenansicht,
- Fig. 4: in gleicher Weise den äußeren Konusring der Fig. 1 und 2,
- Fig. 5: den Konusbolzen der Fig. 1 und 2 in einem Schnitt in Seitenansicht und
- Fig. 6a bis 6c: die Einzelteile des Konusbolzens der Fig. 1, 2 und 5, jeweils in einer Ansicht und in einem Schnitt in Seitenansicht.

Die einander auf einer gewissen Länge mit einem Bereich geringerer Wanddicke umfangsmäßig übergreifend ausgebildeten Rohrteile 1 und 2 weisen die koaxial zueinander angeordneten Aussparungen 3 bzw. 4 auf, die mit den ringbundförmigen Absätzen 5 bzw. 6 verbunden sind. In die Aussparung 3 des inneren Rohrteils 1 ist der mit dem ringbundförmigen Flansch 8 sowie der Gewindeöffnung 9 versehene Gewindering 7 mit dem Flansch 8 am Absatz 5 anliegend angeordnet. Ebenso ist in der Aussparung 4 des äußeren Rohrteils 2 der mit dem ringbundförmigen Flansch 11 und der konischen Öffnung 12 versehene Konusring 10 mit dem Flansch 11 am Absatz 6 anliegend angeordnet.

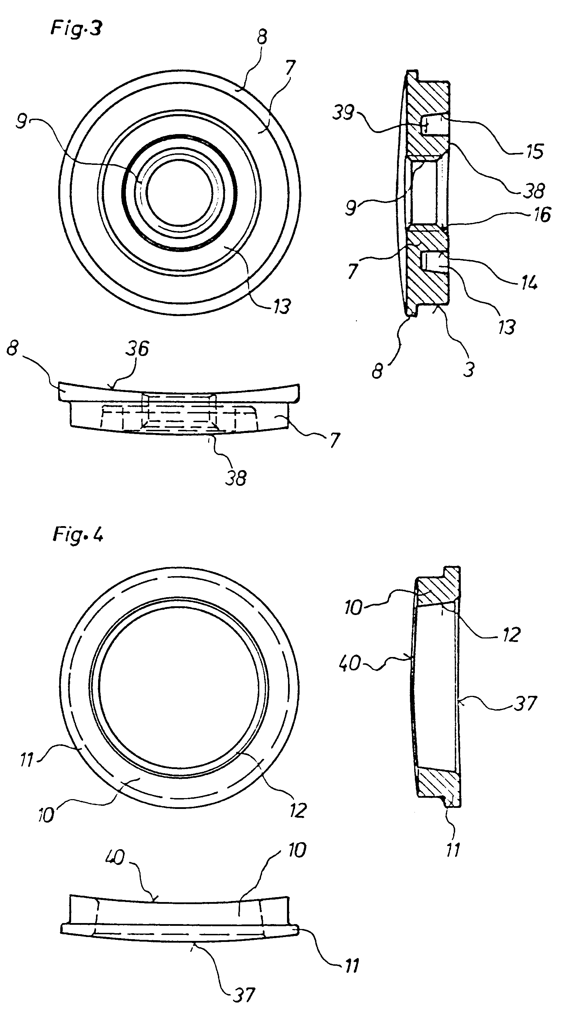

Der Gewindering 7 weist, wie insbesondere aus Fig. 3 deutlich zu ersehen ist, die mit zylindrischer Innenfläche 14 und konischer Außenfläche 15 versehene Ringnut 13 sowie die Anfasung 16 auf.

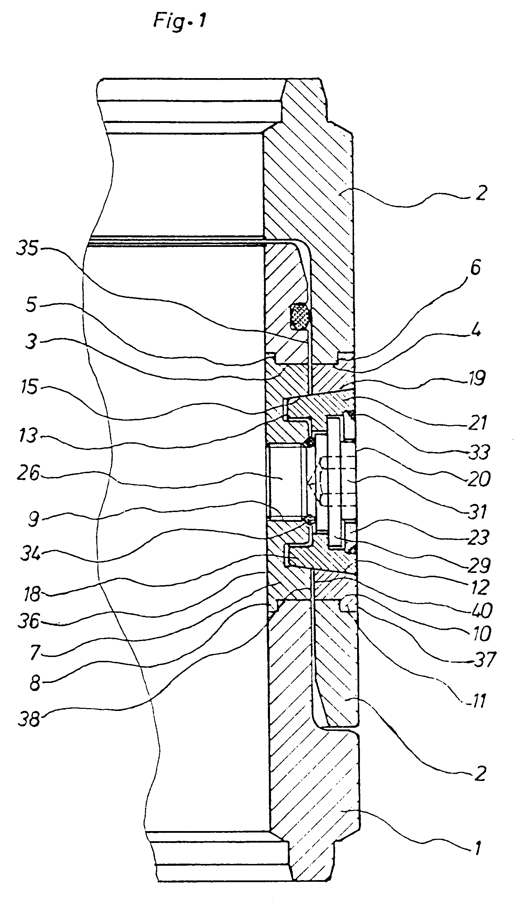

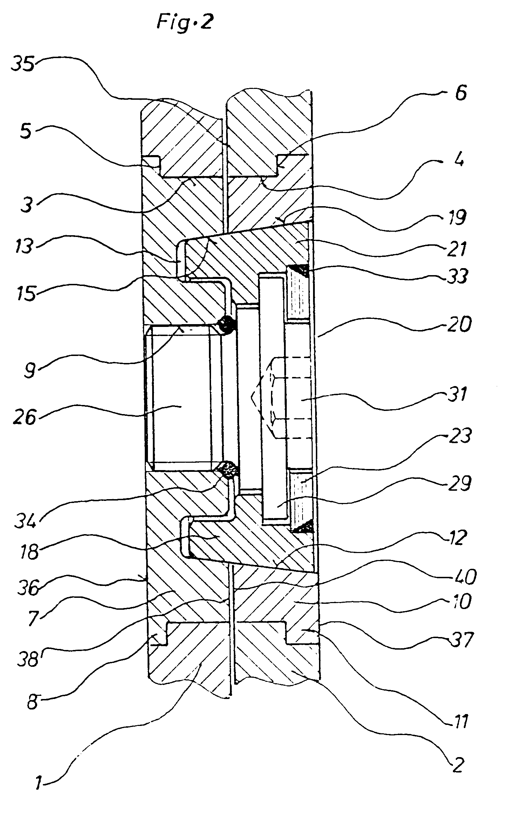

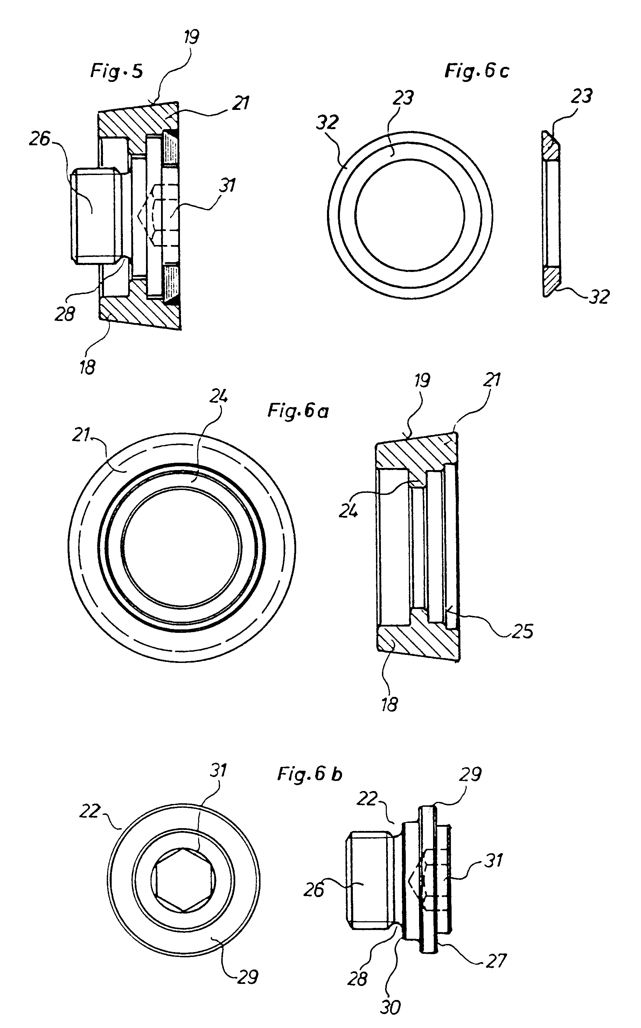

Gemäß Fig. 1 und 2 ist in der konischen Öffnung 12 des in Fig. 4 einzeln dargestellten Konusrings 10 mit seinem ringzylindrischen Vorsprung 18 bis in die Ringnut 13 hineinreichend und mit seiner äußeren Konusfläche 19 an der konischen Innenfläche der Öffnung 12 sowie der konischen Außenfläche 15 der Ringnut 13 anliegend der Konusbolzen 20 angeordnet. Der Konusbolzen 20 weist den in Fig. 6a dargestellten Ringkonus 21 sowie die in Fig. 6b gezeigte Bundschraube 22 und die in Fig. 6c gezeigte Ringscheibe 23 auf.

Der mit dem ringförmigen Vorsprung 18 und der konischen Außenfläche 19 ausgebildete Ringkonus 21 weist ferner den nach innen gerichteten Ringflansch 24 und die ringförmige Schulter 25 auf.

Die Bundschraube 22 weist den Gewindezapfen 26 und den an diesen anschließenden Kopfteil 27 auf. Der Übergang vom Gewindezapfen 26 zum Kopfteil 27 ist mit der starken Ausrundung 28 versehen und ferner ist am Kopfteil 27 der nach außen vorstehende Ringflansch 29 und die Ringschulter 30 sowie der Innensechskant 31 ausgebildet.

Die Ringscheibe 23 ist hier mit der starken Anfasung 32 versehen.

Wie aus den Fig. 1 und 2 und insbesondere aus Fig. 5 klar zu ersehen ist, sind der Konusring 21, die Bundschraube 22 und die Ringscheibe 23 so aufeinander abgestimmt und bemessen, daß bei zusammengebautem, aber noch nicht in den Gewindering 7 eingeschraubten Konusbolzen 20 die Bundschraube 22 bei auf der Ringschulter 25 aufliegender und längs der Anfasung 32 eingeschweißter Ringscheibe 23 sich mit radialem sowie auch axialem Spiel leicht verdrehbar gegen Herausfallen gesichert im Ringkonus 21 befindet.

Wie aus Fig. 1 und Fig. 2 ersichtlich, wird beim Einsetzen des Konusbolzens 20 in den Konusring 10 und Gewindering 7 bzw. Einschrauben dessen Bundschraube 22 in den Gewindering 7 der Ringkonus 21 über seinen Ringflansch 24 durch den Ringflansch 29 der Bundschraube 22 unter Aufhebung des axialen Spiels zwischen Ringkonus 21 und Bundschraube 22 in Einschraubrichtung zwangsweise nachgeführt, d.h. in die Ringe 7 und 10 hineingezogen, wobei die konische Fläche des Ringkonus 21 zur satten Anlage an den Konusflächen 15 und 12 der Ringe 7 und 10 gebracht wird. Über den Konusbolzen 22 sind somit die Ringe 7 und 10 und über diese wiederum die Rohrteile 1 und 2 sowohl in radialer als auch in axialer Richtung starr miteinander verriegelt.

Wie die Fig. 1 und 2 weiter klar erkennen lassen, ist dabei der Kopfteil 27 der Bundschraube 22 mit dem Ringkonus 21 über den Ringflansch 29 ausschließlich und in axialer Richtung auf Druck- bzw. Zugbeanspruchung verbunden, wogegen der Kopfteil 27 in axialer Richtung gegenüber dem Ringkonus 21 wie auch gegenüber der mittels der Schweißnaht 33 in den Ringkonus 21 eingeschweißten Scheibe 23 nach wie vor Spiel, dessen Größe selbstverständlich in der erforderlichen und geeigneten Weise bemessen ist, aufweist. Eine gegenseitige Verschiebung der Rohrteile 1 und 2 in Längs- und/oder Quer- bzw. Umfangsrichtung - sofern sie im Hinblick auf die beispielsweise bei Bohrrohren sehr hohen Beanspruchungen überhaupt vorstellbar wäre - würde sich somit allenfalls auf den Gewindezapfen 26 der Bundschraube 22 sowie auf den Ringkonus 21 samt Scheibe 23 auswirken, wobei aber der Kopfteil 27 der Bundschraube 22 über den Ringkonus 21 in radialer Richtung, abgesehen von einer etwaigen verhältnismäßig geringen Reibbeanspruchung zwischen den Ringflanschen 24 und 29, keinerlei Beanspruchungen ausgesetzt wäre.

Nach den Fig. 1 und 2 ist im Spalt 35 am Übergang vom Gewindezapfen 26 zum Kopfteil 27 der Bundschraube 22 in der Ausrundung 28 der Dichtungsring 34 angeordnet, dem in bezug auf die Kraftübertragungsverhältnisse jedoch keine Bedeutung zukommt. Eine weitere Dichtung ist gemäß Fig. 1 des sich über den ganzen Umfang erstreckenden Dichtungsrings 41 oberhalb des Gewinderings 7 und des Konusrings 10 im Spalt 35 vorgesehen. Sofern zweckmäßig oder erforderlich, kann ein solcher Dichtungsring auch unterhalb von Gewindering 7 und Konusring 10 im Spalt 35 vorgesehen werden.

Wie die Fig. 1 und 2 ebenfalls klar erkennen lassen, sind die Ausbildung und die Abmessungen des Konusbolzens 20 bzw. seiner Teile 21, 22 und 23 so getroffen, daß in fertig montiertem Zustand der Verbindung weder der Gewindezapfen 26 über die Innenfläche 36 des Gewinderings 7 noch der Kopfteil 27 oder der Ringkonus 21 samt Scheibe 23 über die Außenfläche 37 des Konusrings 10 überstehen. Um eine in jedem Fall sichere und feste Verbindung zu gewährleisten, sind der Ringflansch 24 und der ringförmige Vorsprung 18 des Ringkonus 21 so ausgebildet, daß in fest angezogenem Zustand der Bundschraube 22 und damit auch des Ringkonus 21 genügend Spiel gegenüber der Außenfläche 38 bzw. dem Grund 39 der Ringnut 13 des Gewinderings 7 vorhanden ist.

Wie sich aus den Fig. 3 und 4 ergibt, sind die Flächen 36 und 38 des Gewinderings 7 sowie die Flächen 37 und 40 des Konusrings 10 der Krümmung der Rohrteile 1 und 2 in Umfangsrichtung angepaßt, so daß sie nach ihrem entsprechenden Einsetzen in die entsprechenden Aussparungen in den Rohrteilen 1 und 2 völlig in deren flächige Erstreckung integriert sind. Eine entsprechend gekrümmte Ausbildung der außen liegenden Fläche von Ringkonus 21 und Scheibe 23 könnte selbstverständlich ebenfalls vorgesehen werden; darauf kann jedoch ohne Nachteil verzichtet werden, wenn dafür gesorgt ist, daß der Ringkonus 21 und die Scheibe 23 in fertig montiertem Zustand der Rohrverbindung an keiner Stelle über die Außenfläche des Rohrteils 2 bzw. die Außenfläche 37 des Konusrings 10 übersteht.

Beim Lösen des Verbindungselements, d.h. beim Linksdrehen der Bundschraube 22 drückt diese über dem Ringflansch 29 auf die Scheibe 23, die kraftschlüssig mit dem Konusbolzenteil 21 verbunden ist. Dadurch wird der gesamte Konusbolzen 20 nach außen gedrückt und die Rohrenden können abgetrennt werden. In diesem Zusammenhang ist darauf hinzuweisen, daß der Gewindering 7, der Konusring 10 und auch der Ringkonus 21 an ihrem Umfang nicht notwendigerweise eine kreisrunde Form aufweisen müssen, sie vielmehr auch eine andere, beispielsweise quadratische, achteckige od.dgl. Gestalt haben könnten, was insbesondere das orientierte und verdrehsichere Einsetzen von Gewindering 7 und Konusring 10 in die Rohrteile 1 und 2 erleichtern könnte bzw. bewirken würde. Aus fertigungstechnischen Gründen ist der kreisrunden Ausführungsform jedoch der Vorzug zu geben, zumal sich die verdrehsichere Anbringung von Gewindering 7 und/oder Konusring 10 erforderlichenfalls auf einfache Weise, etwa durch eine Schweißsicherung, Stiftsicherung od.dgl. bewerkstelligen läßt.

Ebenso ist in bezug auf den Konusbolzen 20 festzustellen, daß anstelle des in den Fig. 1, 2 und 6b dargestellten Innensechskants 31 selbstverständlich auch eine andere geeignete Ausführungsform gewählt werden könnte, beispielsweise ein Innenvierkant od.dgl., und daß anstelle eines Einschweißens der Scheibe 23 gemäß Fig. 1 und 2 ebenso auch eine andere Befestigungsform, beispielsweise ein Einschrauben mit etwaiger Stiftsicherung oder auch ein Eineisen, welches auch für den Gewindering 7 und/oder den Konusring 10 in Betracht käme, angewendet werden könnte.

In bezug auf die zur Verwendung kommenden Materialien für die Verbindung ist zu erwähnen, daß diese selbstverständlich in Abhängigkeit von der Art der Rohrverbindung und der damit verbundenen Beanspruchung nach den in der Technik allgemein geltenden Grundsätzen ausgewählt werden, so daß alle für die Rohrverbindung verwendeten Teile ihrer Bestimmung voll und ganz gerecht werden können.

## Patentansprüche

1. Rohrverbindung, insbesondere für Bohrrohre, bei der die koaxial miteinander zu verbindenden Rohrteile (1, 2) auf einem Teil ihrer Länge außen- bzw. innenseitig mit einer ringzylindrischen Ausnehmung versehen sind und sich längs dieses Teils zumindest angenähert zur vollen Wanddicke der Rohrteile ergänzend gegenseitig überlappen, und bei der die Rohrteile im überlappten Bereich mit wenigstens zwei, vorzugsweise einer Mehrzahl von insbesondere gleichmäßig über den Umfang verteilt angeordneten, radialen, zueinander koaxialen Bohrungen (3, 4) versehen sind, in welche Ringe eingesetzt sind, über welche die Rohrteile mittels eines Gewindeelementes zug- und drehfest miteinander verbunden sind, und wobei in die Wand des innen befindlichen Rohrteiles (1) Gewinderinge (7) mit einer zentralen Gewindebohrung sowie mit einer Ringnut (13) mit konischer Fläche bündig mit der Innenfläche des Rohrteils (1) in dieses eingesetzt sind, und wobei die Rohrteile (1, 2) mittels eines Konusbolzens miteinander verbunden sind, der einen Ring (21) mit konischer Außenfläche (19) aufweist sowie eine in diesen mit radialem Spiel verdrehbar eingesetzte Bundschraube (22) mit stufenförmig abgesetztem Kopfteil, welche in diesem mittels einer das kopfseitige Ende der Bundschraube umgebenden, in den Ring eingesetzten Abdeckscheibe (23) mit axialem Spiel gehalten ist, wobei bei völlig in die Gewindebohrung des Gewinderinges (7) eingeschraubten Konusbolzen durch Anlage des bundförmigen Ansatzes der Bundschraube (22) gegen eine radiale Ringfläche des Rings das axiale Spiel zwischen Bundschraube und Ringkonus (21) aufgehoben und der Ringkonus mit seiner konischen Außenfläche (19) bündig an einer konischen Gegenfläche angepreßt ist und dabei die Rohrteile starr miteinander verbunden sind, gekennzeichnet durch folgende Merkmale:
a) die Ringnut (13) besitzt eine konische Außenfläche (15);
b) der ringförmige Vorsprung (18) des Ringkonus (21) besitzt eine konische Außenfläche, die gegen die konische Fläche (15) der Ringnut (13) gepreßt ist;
c) der Gewindering (7) stützt sich von innen her mit einem Ringbund (8) an der Innenfläche (36) des Rohrteils (1) ab;
d) in das Außenrohrteil (2) ist ein Konusring (10) eingesetzt, der sich von außen her mit einem Ringbund (11) am Rohrteil (2) bündig mit dessen Außenfläche (37) abstützt;
e) die konische Innenfläche (12) des Konusringes (10) stellt die konische Gegenfläche für die Konusfläche (19) des Ringkonus (21) dar;
f) die Bundschraube (22) besitzt einen Innensechskant (31);
g) die Abdeckscheibe (23) ist bündig in den Ringkonus (21) eingesetzt;
h) der Ringkonus (21) ist mit seiner konischen Außenfläche (19) bündig an die konische Innenfläche (12) des Konusringes (10) und in deren Verlängerung mit einem außenseitig konischen ringförmigen Vorsprung (18) an die konische Außenfläche (15) der Ringnut (13) des Gewinderinges (7) unter Ausbildung einer starren Verbindung der Rohrteile (1,2) angepreßt.

2. Rohrverbindung nach Anspruch 1, dadurch gekennzeichnet, daß die Abdeckscheibe (23) in den Ringkonus (21) eingeschweißt ist.

3. Rohrverbindung nach Anspruch 1, dadurch gekennzeichnet, daß die Abdeckscheibe (23) in den Ringkonus (21) eingeschraubt ist.

4. Rohrverbindung nach Anpruch 3, dadurch gekennzeichnet, daß die Schraubverbindung zwischen Ringkonus (21) und Abdeckscheibe (23) mit einer Sicherung, beispielsweise Stiftsicherung, versehen ist.

5. Rohrverbindung nach einem der Ansprüche 1 bis 4, dadurch gekennzeichnet, daß die Bundschraube (22) mit einem Innensechskant (31) versehen ist.

6. Rohrverbindung nach einem der Ansprüche 1 bis 5, dadurch gekennzeichnet, daß im Spalt (5, 35) zwischen Gewindering (7) und Konusring (10) um den Hals der Bundschraube (22) ein O-Ring (34) angeordnet ist.

7. Rohrverbindung nach einem der Ansprüche 1 bis 6, dadurch gekennzeichnet, daß der Gewindering (7) und der Konusring (10) in ihrer Umfangsrichtung oberflächig entsprechend dem Radius der Rohrteile (1, 2) gekrümmt ausgebildet sind.

8. Rohrverbindung nach einem der Ansprüche 1 bis 7, dadurch gekennzeichnet, daß mindestens oberhalb der Verbindung im Spalt (35) zwischen den Rohrteilen (1, 2) eine Ringdichtung angeordnet ist.

## Claims

1. A pipe connection, in particular for bore casings, in which the pipe portions (1,2) which are to be connected to each other coaxially are provided, on a portion of their length, with a ring-cylindrical recess located at their inner and outer side, respectively, and which, along said portion, overlap each other in a complementary manner to form, at least approximately, the full wall thickness of the pipe portions, and in which pipe connection the pipe portions in the overlapped region are provided with at least two, preferably with a plurality of radial, coaxial bores (3,4) which are, in particular uniformly, distributed over the circumference, said bores having inserted rings via which the pipe portions are connected with each other at tensile and torsional strength by means of a thread element; and wherein ring followers (7) having a central threaded bore and a ring groove (13) with a conical surface are inserted into the wall of the inner pipe portion (1) so as to be flush with the inner surface of the pipe portion (1), and wherein the pipe portions (1,2) are connected to each other by means of a cone pin having a ring (21) with a conical outer surface (19) as well as a collar screw (22) with a stepped head portion which collar screw is inserted in said pin in a turnable manner with radial play and is held in the same with axial play by means of a covering disk (23) which surrounds the head end of the collar screw and that is inserted in the ring; wherein, in case the cone pin is completely screwed in the threaded bore of the ring follower (7), the axial play between collar screw and ring cone (21) is neutralized by the fact that the collar-shaped dog point of the collar screw (22) fits against the radial ring area of the ring, and the conical outer surface (19) of the ring cone is pressed flush against a conical opposite surface, thereby rigidly connecting the pipe portions to each other, which pipe connection is characterized by the following features:
a) the ring groove (13) has a conical outer surface (15);
b) the annular projecting part (18) of the ring cone (21) has a conical outer surface which is pressed against the conical surface (15) of the ring groove (13);
c) a ring collar (8) of the threaded ring (7) is supported from the inside on the inner surface (36) of the pipe portion (1);
d) the outer pipe portion (2) has an inserted cone ring (10) whose ring collar (11) is supported from the outside on the pipe portion (2), i.e., flush with its outer surface (37);
e) the conical inner surface (12) of the cone ring (10) is the conical opposite surface for the conical surface (19) of the ring cone (21);
f) the collar screw (22) has a hexagon socket (31);
g) the covering disk (23) is inserted flush in the ring cone (21);
h) the conical outer surface (19) of the ring cone (21) is pressed flush to the conical inner surface (12) of the cone ring (10) and, along its extension, an outwardly conical annular projection (18) of the ring cone (21) is pressed to the conical outer surface (15) of the ring groove (13) of the ring follower (7), thereby forming a rigid connection of the pipe portions (1,2).

2. The pipe connection according to claim 1 characterized in that the covering disk (23) is welded into the ring cone (21).

3. The pipe connection according to claim 1 characterized in that the covering disk (23) is screwed into the ring cone (21).

4. The pipe connection according to claim 3 characterized in that the screwed connection between ring cone (21) and covering disk (23) is provided with a safety device, for example, a locking pin.

5. The pipe connection according to any one of claims 1 to 4 characterized in that the collar screw (22) is provided with a hexagon socket (31).

6. The pipe connection according to any one of claims 1 to 5 characterized in that, in the gap (5,35) between ring follower (7) and cone ring (10), an O-ring (34) is located around the neck of the collar screw (22).

7. The pipe connection according to any one of claims 1 to 6 characterized in that the threaded ring (7) and the cone ring (10) are formed with a circumferentially curved surface corresponding to the radius of the pipe portions (1,2).

8. The pipe connection according to any one of claims 1 to 7 characterized in that a sealing ring is located at least above the connection within the gap (35) between the pipe portions (1,2).

## Revendications

1. Liaison de tubes, en particulier pour tubes de forage, dans laquelle les parties de tube (1, 2) à relier ensemble coaxialement sont pourvues, sur une partie de leur longueur, en face extérieure ou intérieure, d'un évidement, en forme d'anneau de cercle et se chevauchent le long de cette partie, au moins à peu près pour la totalité de l'épaisseur des parties de tube, en se complétant mutuellement, et liaison dans laquelle les parties de tube situées dans la zone de chevauchement sont pourvues d'au moins deux, de préférence une pluralité de perçages (3, 4) coaxiaux les uns par rapport aux autres, radiaux, en particulier répartis régulièrement sur la périphérie, dans lesquels sont insérées des bagues, par l'intermédiaire desquelles les parties de tube sont reliées ensemble en traction et en rotation, au moyen d'un élément fileté, et/ou des bagues taraudées (7) portant un trou taraudé central ainsi qu'une gorge annulaire (13) à surface conique sont insérées dans la paroi de la partie tubulaire (1) se trouvant a' l'intérieur, avec affleurement par rapport à la surface intérieure de la partie tubulaire (1), dans cette dernière, et les parties tubulaires (1, 2) sont reliées ensemble au moyen d'un boulon conique présentant une bague (21) à surface extérieure (19) conique, ainsi qu'une vis à collerette (22), insérée dans cette surface intérieure, de façon à pouvoir tourner et avec un jeu radial, vis comportant une partie tête avec un décrochement en gradin, maintenue avec un jeu axial dans cette partie tête, au moyen d'une rondelle de recouvrement (23), entourant l'extrémité côté tête de la vis à collerette et insérée dans la bague, où lorsque le boulon conique est entièrement vissé dans le trou taraudé de la bague filetée (7), par appui de l'appendice en forme de collerette de la vis à collerette (22) contre une surface annulaire radiale de la bague, le jeu axial entre vis à collerette et cône de bague (21) est supprimé et le cône de bague étant pressé par surface extérieure conique (19), avec affleurement, sur une surface conjuguée conique et les parties de tube étant reliées rigidement entre elles, caractérisée par les propriétés suivantes :
a) la gorge annulaire (13) comporte une surface extérieure (15) conique;
b) la saillie annulaire (18) du cône de bague (21) comporte une surface extérieure conique, pressée contre la surface conique (15) de la gorge annulaire (13);
c) la bague taraudée (7) prend appui depuis l'intérieur, par une collerette annulaire (8), sur la surface intérieure (36) de la partie de tube (1);
d) une bague conique (10) prenant appui de l'extérieur, par une collerette annulaire (11), sur la partie de tube (2), de façon affleurée vis-à-vis de sa surface extérieure (37), est insérée dans la partie de tube extérieur (2);
e) la surface intérieure conique (12) de la bague conique (10) constitue la surface conjuguée conique de la surface conique (19) du cône de bague (21);
f) la vis à collerette (29) comporte un six pans intérieur (31);
g) la rondelle de recouvrement (23) est insérée de façon affleurée dans le cône de bague (21);
h) le cône de bague (21) est pressé par sa surface extérieure conique (19), de façon affleurée, sur la surface intérieure conique (12) de la bague de cône (10) et, dans son prolongement, par une saillie (18) annulaire conique extérieure, sur la surface extérieure (15) conique de la gorge annulaire (13) de la bague taraudée (7), en constituant une liaison rigide entre les parties de tube (1, 2).

2. Liaison de tubes selon la revendication 1, caractérisée en ce que la rondelle de recouvrement (23) est soudée dans le cône de bague (21).

3. Liaison de tubes selon la revendication 1, caractérisée en ce que la rondelle de recouvrement (23) est vissée dans le cône de bague (21).

4. Liaison de tubes selon la revendication 3, caractérisée en ce que la liaison vissée entre cône de bague (21) et rondelle de recouvrement (23) est pourvue d'une sécurité, par exemple une sécurité à goupille.

5. Liaison de tubes selon l'une des revendications 1 à 4, caractérisée en ce que la vis à collerette (22) est pourvue d'un six pans intérieur (31).

6. Liaison de tubes selon l'une des revendications 1 à 5, caractérisée en ce qu'un joint torique (34) est disposé dans l'interstice (5, 35) existant entre bague taraudée (7) et bague de cône (10), autour du col de la vis à collerette (22).

7. Liaison de tubes selon l'une des revendications 1 à 6, caractérisée en ce que la bague taraudée (7) et la bague de cône (10) ont une incurvation de leurs surfaces, dans la direction périphérique, de manière correspondant aux rayons des parties de tube (1, 2).

8. Liaison de tubes selon l'une des revendications 1 à 7, caractérisée en ce que, au moins au-dessus de la liaison, un joint d'étanchéité annulaire est disposé dans l'interstice (35) existant entre les parties de tube (1, 2).
